# EUROPEAN PATENT SPECIFICATION

(11) **EP 3 014 894 B1**
(45) Date of publication and mention of the grant of the patent: **23.10.2019**
(21) Application number: 14747739.2
(22) Date of filing: 23.06.2014
(51) Int. Cl.: H04N 21/262, G06F 16/438, H04N 21/858

(54) **CREATING PLAYLIST FROM WEB PAGE**
ERZEUGUNG VON ABSPIELLISTEN AUS WEBSEITEN
CRÉATION D'UNE LISTE DE LECTURE À PARTIR D'UNE PAGE WEB

(30) Priority: 25.06.2013 US 201361839327 P; 16.05.2014 US 201414280122
(43) Date of publication of application: 04.05.2016
(73) Proprietor: Microsoft Technology Licensing, LLC, Redmond, WA 98052 (US)
(72) Inventor: MOLLIS, Adam, Redmond, Washington 98052-6399 (US); ALTON, Ben, Redmond, Washington 98052-6399 (US); HOHMAN, Gregory, Redmond, Washington 98052-6399 (US); LIJANTO, Martin, Redmond, Washington 98052-6399 (US)
(74) Representative: CMS Cameron McKenna Nabarro Olswang LLP
(86) International application number: PCT/US2014/043556
(87) International publication number: WO 2014/209826

(56) References cited:
- US-A1- 2008 263 476
- US-A1- 2008 313 308
- US-A1- 2010 004 921
- US-A1- 2012 278 082
- US-B1- 7 281 034

## Description

### BACKGROUND

Media tracks, including audio tracks and video tracks, may be organized into playlists. A playlist is a defined list of media tracks that may be played in any order. Playlists may be used to present media tracks on a broadcast network, and also may be used by individuals to organize a media collection, such as a user's personal collection of songs, into smaller groups for playback. For example, a user may define different playlists for exercising, relaxing, and performing other activities. Users also may access playlists created by others (e.g. other users, media providers, etc.), for example, to discover new music.

US 2008/0313308 describes how a web page can be converted into a series of multimedia files (using a text to speech converter) and put into a playlist so that the user can listen to the web page on a portable media player instead of viewing them in a browser in the conventional way. US 2012/0278082 describes converting text from web documents into synthesized speech that can then be played on an audio player.

US 2008/0263476 describes a method of automatically generating playlists based on a particular artist that a user identifies as a seed. A list of similar artists is generated from the seed artist and presented to the user and then when the user is satisfied with the list of similar artists, the user initiates the playlist generation.

### SUMMARY

According to aspects of the present invention there is provided a method and device as defined in the accompanying claims.

Embodiments are disclosed that relate to automatically generating playlists from selected text. In one example, a method of generating a playlist comprising a list of media items comprises receiving a request to generate a playlist from a selected text, obtaining identification information for one or more items of media information within the selected text, and generating the playlist with a list of media items identified from the one or more items of media information within the selected text.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIGS. 1A-1B show a flow diagram depicting an example of a method for creating a playlist from selected text.
FIG. 2 shows a schematic diagram of an example of a web page comprising a user interface control selectable to generate a playlist from the website.
FIG. 3 shows an example of a playlist automatically formed form the web page of FIG. 2.
FIG. 4 shows an example of a use environment in which playlists may be automatically generated from web pages.
FIG. 5 shows a flow diagram depicting an example of a method for creating a playlist from a specified uniform resource locator (URL).
FIG. 6 shows an example of a computing device.
FIG. 7 shows a schematic diagram of an example of a playlist generation control provided on a user interface as an operating system or local application functionality.

### DETAILED DESCRIPTION

As mentioned above, playlists may be created in various manners. For example, playlists may be created manually by users and/or media providers, and various services may allow users to submit playlists for discovery by other users. Further, automatic playlist generation tools may be available, for example, via web sites. However, such tools may require a user to manually enter an artist, album, or song name to generate the playlist.

Published or shared playlists are but one way that people may share media interests with others. For example, people also may mention favorite artists, songs, albums, videos, etc., on web pages such as social networking sites, blogs, etc. Further, other types of web sites, such as news sites, content sites, and informational sites, also may include web pages on which media content items are mentioned. Indeed, music discovery may be one of the more popular activities on the web.

Accordingly, embodiments are disclosed herein that relate to the automatic creation of playlists based upon the content of selected text, such as text from a web page or other network-accessible location. For example, a person may maintain a blog, a social network page, or the like, in which favorite artists, albums, songs, etc. are mentioned. If a reader of the web page wishes to create a playlist comprising tracks on the blog, the reader may automatically create the playlist via methods discussed below. In this manner, the reader may obtain the playlist without having to manually enter and arrange tracks that are listed on the web page. It will be understood that playlists similarly may be prepared automatically from any suitable text containing any suitable content. For example, rather than a playlist of audio tracks, a list of television shows, movies, videos, and/or other media content may be assembled. Further, rather than a web site, a playlist may be created from an email message, document, etc.

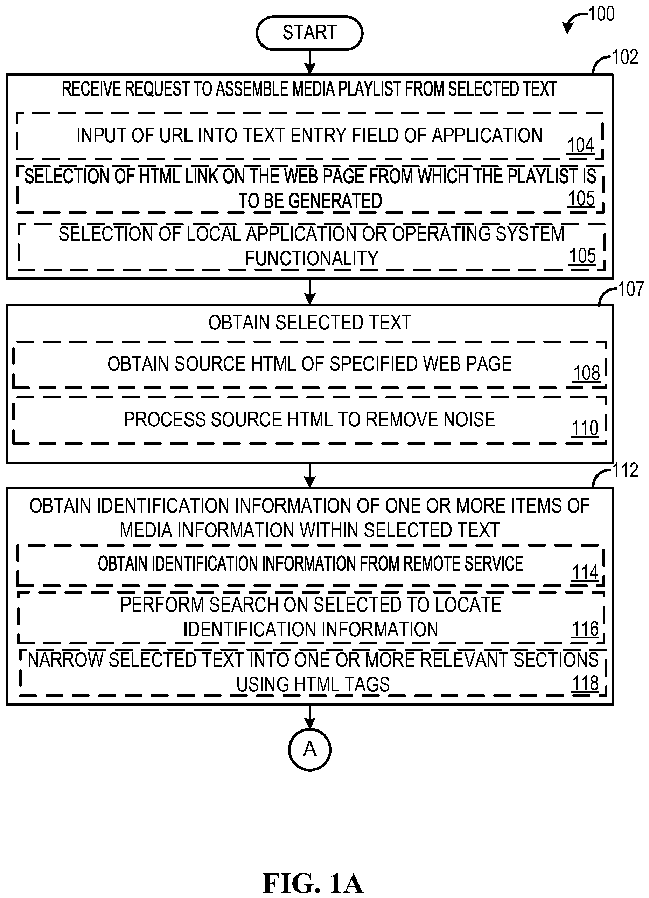

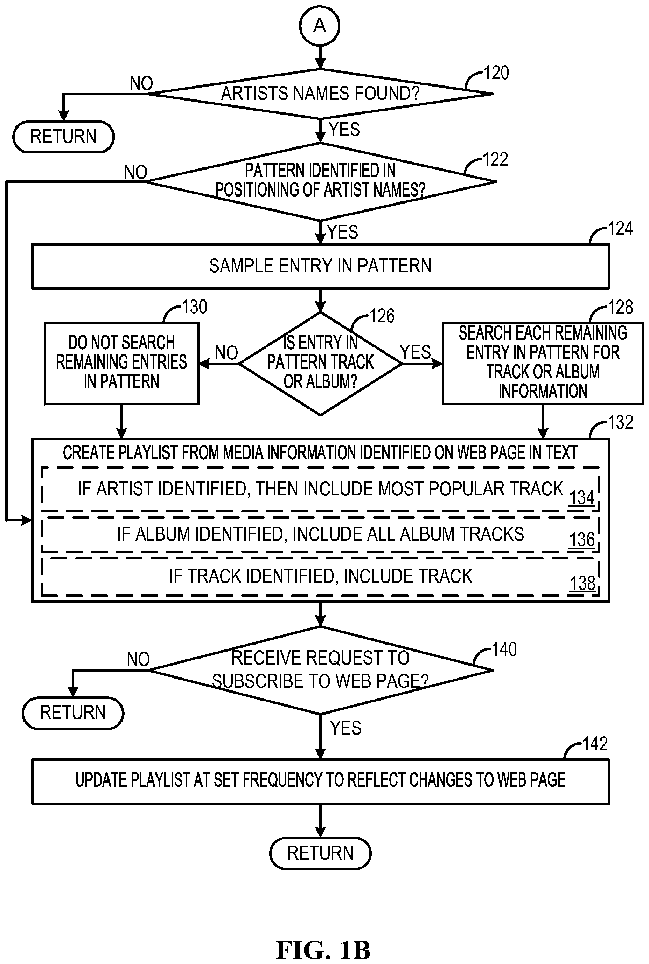

FIGS. 1A-1B show a flow diagram depicting an example of a method 100 for automatically creating a playlist from selected text. Method 100 is one example of a method for creating a playlist from selected text and is described in the context of creating a playlist of audio tracks from a specified web page. However, as mentioned above, it will be understood that a playlist may be generated from other types of selected text and/or include any other suitable types of media, such as television shows.

Method 100 may be performed via the execution of computer-readable instructions corresponding to each described step of method 100. It will be understood that such instructions may be executed by any suitable logic hardware implemented on any suitable type of device. Examples of suitable logic hardware include, but are not limited to, general microprocessors, system-on-a-chip (SOC) configurations, graphics processing units (GPU), and/or any other suitable hardware device or devices. Examples of suitable devices include, but are not limited to, mobile devices (e.g. smart phones, tablet computers, laptop computers, portable media players, etc.), desktop computers, video game systems, set-top boxes for television systems, stereo systems, wearable computing systems, web server computers, mainframe computers, etc. Example hardware implementations are described in more detail below.

Method 100 comprises, at 102, receiving a request to assemble a media playlist from selected text. The selected text may include a text input by a user in one example. In other examples, the selected text may be text included on a web page. In such examples, the request to assembly the playlist may identify a specified web page. The request may specify the web page, for example, by including a uniform resource locator (URL) of the web page.

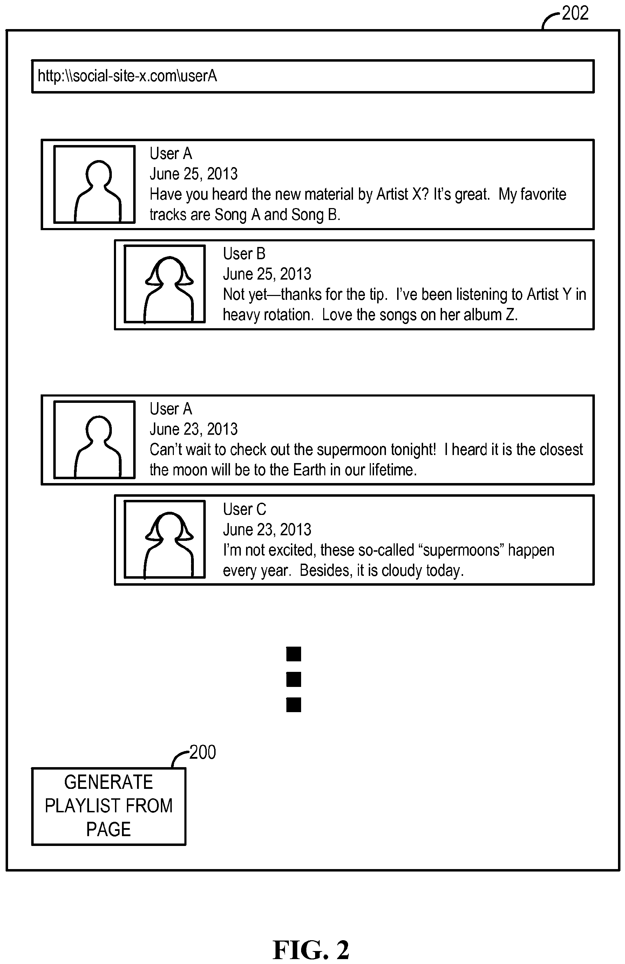

Such a request may be received in any suitable manner. For example, in some embodiments, a user may input a desired URL that identifies a web page into a text entry field of a user interface for a playlist generation application executed by a computing device, as indicated at 104. In other examples, a user may make the request by selecting an HTML link located on the web page from which the playlist is to be generated, as indicated at 105. As one non-limiting example, the link may take the form of a user interface control (e.g. a button) that states "generate playlist from this page". This control also may be referred to as a "badge" or "beacon". FIG. 2 shows an example embodiment of a user interface control 200 on a social networking web page 202. Selection of the user interface control 200 may launch a playlist generation program with a URL that points to the source HTML document of web page 202. The playlist generation program then may utilize the URL to obtain the source HTML of web page 202 for processing. The HTML link selected by the user to execute the playlist generation process may be provided as a development tool by an entity that provides the playlist generation application. This may allow web page developers to easily include playlist generation capability on web pages.

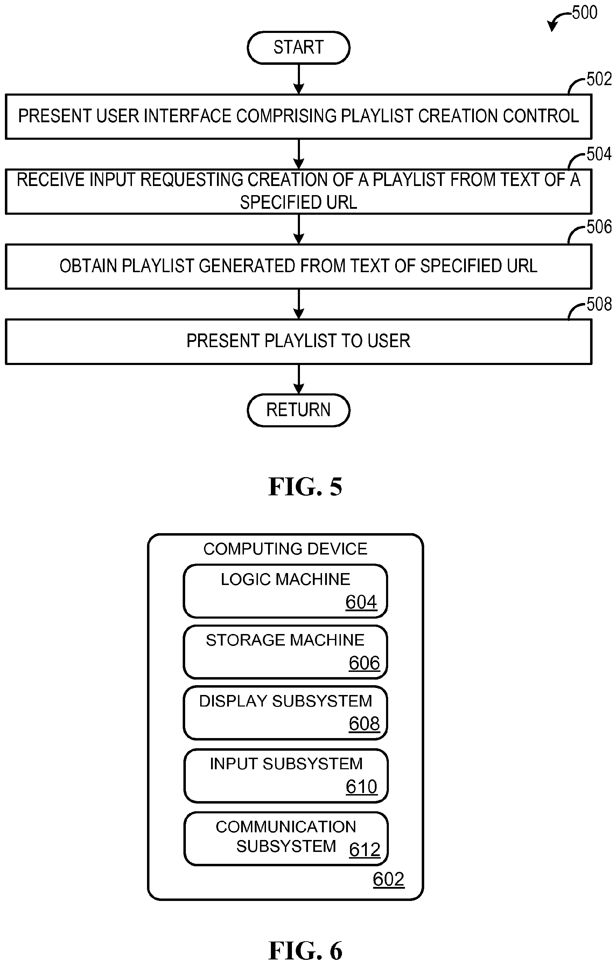

As yet another example, as indicated in FIG. 6, the request may be made by providing an input to an application, operating system, or other program local to the end user, such as selecting a "share" functionality provided by an operating system (e.g. via use of the "share" functionality of the WINDOWS 8.x operating systems, available from Microsoft Corporation of Redmond, WA).

In response to the request, method 100 comprises, at 107, obtaining the requested text. For example, where generation of a playlist from a specified web page is requested, method 100 may comprise obtaining source hypertext markup language (HTML) of the specified web page, as indicated at 108. Further, method 100 may comprise, at 110, processing the source HTML for the web page by removing features such as potentially irrelevant HTML tags (e.g. tags without element content other than child elements), and other types of noise, such as double spaces, tabs, new line characters, and the like. This may help to simplify the source code of the web page for the identification of media-related information on the web page. For example, if the original web page content includes the following HTML code:

```
HTML
<body> <p>this is a sample with an <a>artist name</a>,</p></body>,
```

the text after processing the HTML code may read:
"this is a sample with an","artist name",".".
In the depicted example, the individual text items obtained by the HTML processing are delimited by quotation marks and commas between quoted text, but it will be understood that the text remaining after this processing may take any other suitable form.

Once the source HTML for the web page has been processed, method 100 next comprises, for all identified text items that share a same HTML tag, obtaining identification information of one or more items of media information of the selected text, as indicated at 112. The identification information may be used to identify the one or more items of media content within the selected text, and may include an artist name, song and/or album title, television show title, etc.

In some examples, the identification information may be obtained from a remote service, as indicated at 114. For example, at least a portion of the selected text may be sent to a remote service and the remote service may perform a search on the selected text and return the identification information. In other examples, the identification information may be determined by performing a search on the selected text to locate the identification information, as indicated at 116. Such searching may be performed, for example, by executing a search query against a music catalog using a search engine, and may help to produce a list of possible artist names. In other embodiments, the identified text items may be compared to the music catalog to determine any other suitable information. For example, the identified text items may be compared to song names, album names, and/or any other suitable category of information regarding media items.

To expedite the search process and/or reduce the processing power used to perform the search, in some examples the selected text may be narrowed into one or more sections of text likely to include relevant media items, as indicated at 118. For example, if the selected text is source HTML, as described above, the narrowing may include identifying one or more sections of the selected text using HTML tags, and performing a search on the one or more sections of the selected text. The HTML tags may be any suitable tags that indicate one or more items of media information may be present in the section of text. For example, a web page may contain a "top ten" list of songs. The top ten list may be identified based on HTML tags associated with the list, including paragraph tags, indentation tags, and/or list tags that may indicate the text is formatted into a list, as well as content tags, such as audio or video tags, if the list includes actual audio tracks or video clips. Other types of HTML tags may also be used to narrow the search. If a suitable number of media items are identified in the one or more sections of text (e.g., enough media items to populate the playlist, such as ten or more), the search may end after the one or more sections have been searched. If not, the search may be expanded to include the remaining text.

When searching for identification information within the text, it may be difficult to differentiate between the names of various musical artists, songs, etc., and other words present on the selected web page. Thus, in some examples, if the identification information includes an artist name, the artist name may be cross-referenced against a catalog or database of artists to determine a relative popularity of the artist, and if the popularity of the musical artist is above a threshold, it may be determined that the identification information does indeed identify that artist. For example, the word download may appear frequently on many web pages and in some circumstances may be identified as a musical artist. However, because no artists named "download" may be above the threshold popularity, any information returned from the search and associated with the word download may be discarded. The determination of the popularity of the artist may be performed locally or remotely, for example by the remote service discussed above.

After searching at 112, if one or more artist names (or other identification information of one or more items of media information) is not found at 120, then method 100 may end. In this instance, a notification that no artists (or tracks, albums, videos, movies, TV shows, etc.) were identified on the page may be provided to users. In other embodiments, the processed HTML may be first searched for one type of identification information (such as artists) and if no artist names are found, the search may be performed again for other types of media information, such as track titles and album titles in the event that no artist names are found.

On the other hand, if one or more artist names are found at 120, then method 100 comprises, at 122, identifying any patterns in the positioning of the artist names (or other media information). For example, if a section of HTML from the web page has the following text:

```
"Artist1","word","word","Artist2","word","word","Artist3","word","word",
```

then the pattern "Artist(n) word word" may be detected. In this case, it is possible that the web page contains a list of some sort, such as a list of top songs (in the specific instance that the "word" entries correspond to songs). In the depicted example, each pattern entry includes one "artist" entry and equal numbers of following words, but it will be understood that each artist entry also may be followed by different numbers of words in some instance, as long as sufficient similarities exist for a pattern in the data to be detected.

If a pattern is found, then method 100 comprises, at 124, sampling an entry in the pattern to test if the entry is a track or an album. This may be determined, for example, by using a search engine to search a music catalog with the entry string. A non-limiting example of an entry string to search is "Artist1 word". If it is determined at 126 that the pattern contains tracks or albums, then it may be assumed that the pattern corresponds to a list of tracks or albums, as indicated at 128. In this case, then each remaining entry in the pattern is treated as such, and each entry is used to search for the corresponding type of information (track or album). On the other hand, if the pattern entry is not found to contain tracks or albums, then it may be assumed that the web page just contains artist names. In this case, searching of other pattern entries may be omitted, as shown at 130. It will be understood that similar methods may be used with regard to video content, e.g. by using actor names, series names, episode names, etc.

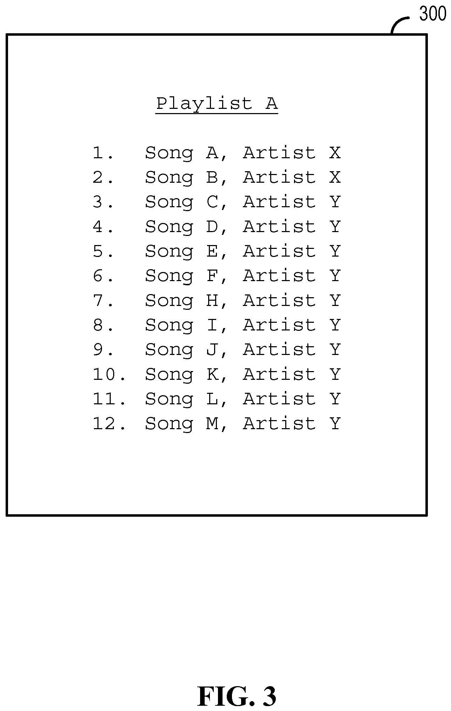

Method 100 next includes, at 132, creating a playlist from the media information identified. The playlist may be assembled in any suitable manner. As one example, for each artist found, the artist's most popular track may be added to the playlist, as indicated at 134. As another example, for each album found, the album's tracks may be added to the playlist, as indicated at 136. As yet another example, for each track found, the track may be added to the playlist, as indicated at 138. As a non-limiting example of such a playlist, FIG. 3 illustrates a playlist 300 automatically generated from web page 202 of FIG. 2. Songs A and B of Artist X are included in the list due to those tracks being specifically mentioned on web page 202. Likewise, all of the tracks from Album Z of Artist Y (e.g. songs C-M) are included in the list due to the reference to Album Z of Artist Y on the web page. The playlist may then be played, shared, stored locally and/or remotely as part of a personal music collection, and/or used in any other suitable manner.

In some examples, the playlist may be assembled from only a subset of the media information. For example, music may be included in a playlist only if it is playable by the user. As a more specific example, some music may be excluded from the playlist, such as explicit content or content that must be purchased, particularly if the user lives in a region where free-streaming play is available for most tracks. In other examples, a region where the playlist is generated may dictate if a song is available (for example, song A may be available in the US but not Canada) for inclusion in the playlist.

Further, in some examples, method 100 includes, at 140, determining if a request to subscribe to the web page has been received. If no request to subscribe to the web page has been made, method 100 ends. On the other hand, if a request to subscribe has been received, method 100 includes updating the playlist at a set frequency as the web page changes at 142. In this way, media items selected for inclusion in the playlist may be updated as the source HTML of the web page changes. For example, a user may subscribe to web page that includes items of media information (e.g., audio artists, albums, and/or songs) that is updated periodically. At a set frequency, the generated playlist may be updated to reflect the changes to the web page. Updating the playlist may include replacing a previous playlist with the updated version of the playlist. The previous playlist may be discarded in some examples or the previous playlist may be archived in other examples.

It will be understood that 124, 126 and 128 are non-limiting examples of how web page content may be used to select media items for inclusion in an automatically generated playlist, and that any other suitable methods may be used. Further, such methods may be driven by the end user. For example, an end user may decide to expand tracks added to a playlist due to the identification of an artist on a web page to the artist's most recent tracks. As another example, a user may choose to download a subset of tracks from an album identified on a web page (e.g. most popular tracks, tracks that are shorter than a selected playback time, and/or any other such groupings). Custom settings may be stored as user preferences that are accessible by a computing device that performs method. Further, as mentioned above, method 100 also may be applied to the assembly of playlists of video items.

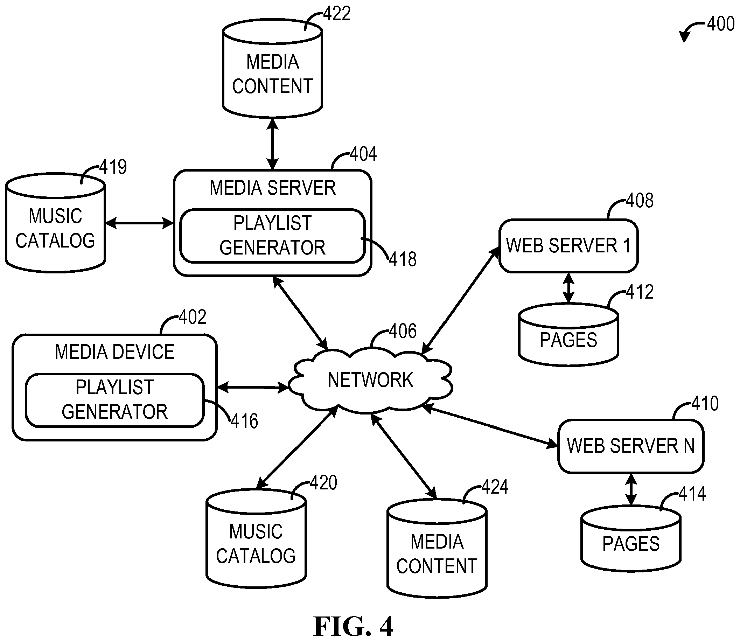

FIG. 4 shows an example of a use environment 400 in which method 100 may be implemented. Use environment 400 comprises a media device 402 operable by an end user to play media via playlists. Media device 402 may represent any suitable computing device configured to receive and play media items (e.g. audio and/or video items), including but not limited to the devices described above. Media device is configured to access a media server 404 via a network 406 for obtaining media for playback. Media server 404 may represent any suitable implementation of any suitable logic operating on any suitable computer architecture for providing media to end users, including but not limited to server computers, databases, and executable instructions and data stored thereon and/or otherwise associated therewith. Media server 404 may be configured to provide media in streaming and/or downloadable form. While a single media server is depicted in FIG. 2, it will be understood that media device 402 may access multiple media services. It also will be understood that network 406 represents any suitable network or combination of networks over which computing devices may communicate with one another.

FIG. 4 also depicts an arbitrary number of web servers, illustrated as web server 1 408 and web server N 410. Each web server may receive queries for web pages, and in response retrieve and provide web page content from storage, illustrated respectively at 412 and 414 for web server 1 408 and web server N 410.

As mentioned above, in various embodiments, a user may trigger the automatic generation of a playlist by entering a URL via a user interface of an application executed locally on the user's media device, by selecting a user interface control on a web page that links to a playlist generator service, by utilizing a share functionality of the user's media device, and/or in any other suitable manner. Thus, FIG. 4 shows a playlist generator 416 on media device 402, and a playlist generator 418 associated with the media server 404. It will be understood that logic for automatically generating playlists may reside on any suitable device, including web servers 1 and N, and may be distributed among multiple devices.

FIG. 4 also shows media catalogs 419, 420 and media content 422, 424. Media catalog 419 and media content 422 are local to media server 404, and media catalog 420 and media content 424 are remote from media server 404. Media service may search local and/or remote catalogs to identify artists, songs, albums, and/or other media information from identified text on web pages for the automatic generation of playlists. Likewise, media items for playback may be obtained from storage that is local to or remote from media server 404.

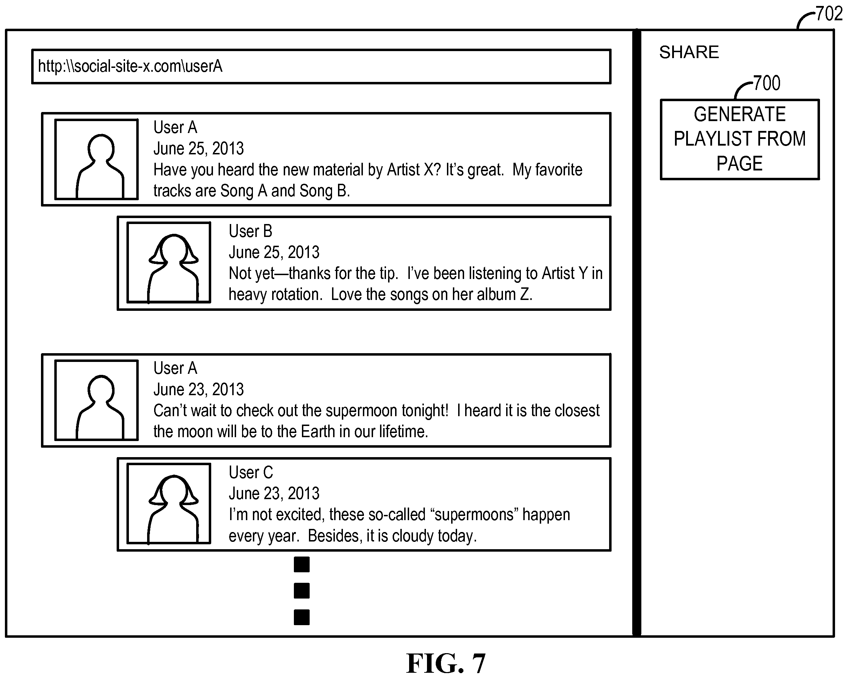

FIG. 5 illustrates another example of a method 500 for presenting a playlist created from selected text. Method 500 may be performed via the execution of computer-readable instructions corresponding to each described step of method 500. Such instructions may be stored on and executed by a suitable computing device, such as media device 402 of FIG. 4. At 502, method 500 includes presenting a user interface comprising a playlist creation control. The playlist creation control may be a suitable user interface component configured to trigger generation of the playlist in response to a user input, such as an operating system control, a user interactive control, or a dedicated field on a web page. FIG. 2 shows an example of an interactive control 200 displayed on a web page, while FIG. 7 shows an example of an operating system-based affordance in which a playlist generation control 700 is included in a "share" menu 702.

At 504, method 500 includes receiving input requesting creation of a playlist from text at a specified URL. The URL may be specified in a suitable manner. In one example, the URL may be specified by an input from the user, such as the URL being entered by the user into the dedicated field of a web page mentioned above. In another example, the URL may be specified by it currently being displayed. For example, the user may navigate to a specific web page and request generation of a playlist from that web page by inputting into an operating system or user interactive control. The operating system or user interactive control may then obtain the URL of that web page to generate the playlist.

At 506, method 500 includes obtaining the playlist created based upon the text at the specified URL. The playlist may be obtained according to the method 100 described above with respect to FIGS. 1A-1B, or may be obtained according to another suitable mechanism. At 508, the playlist is presented to a user, via a display of the computing device for example.

As mentioned above, the methods and processes described herein may be tied to a computing system of one or more computing devices. In particular, such methods and processes may be implemented as a computer-application program or service, an application-programming interface (API), a library, and/or other computer-program product.

FIG. 6 schematically shows a non-limiting embodiment of a computing system 602 that can enact one or more of the methods and processes described above. Computing system 602 is shown in simplified form. Computing system 602 may take the form of one or more personal computers, server computers, tablet computers, home-entertainment computers, network computing devices, gaming devices, mobile computing devices, mobile communication devices (e.g., smart phone), and/or other computing devices.

Computing system 602 includes a logic machine 604 and a storage machine 606. Computing system 602 may optionally include a display subsystem 608, input subsystem 610, communication subsystem 612, and/or other components not shown in FIG. 6.

Logic machine 604 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage machine 606 includes one or more physical devices configured to hold instructions executable by the logic machine to implement the methods and processes described herein. When such methods and processes are implemented, the state of storage machine 606 may be transformed-e.g., to hold different data.

Storage machine 606 may include removable and/or built-in computer readable storage media. Storage machine 606 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 606 may include volatile, nonvolatile, dynamic, static, read/write, read-only, random-access, sequential-access, location-addressable, file-addressable, and/or content-addressable devices.

It will be appreciated that storage machine 606 includes one or more physical devices and excludes propagating signals per se. However, aspects of the instructions described herein alternatively may be propagated by a communication medium (e.g., an electromagnetic signal, an optical signal, etc.), as opposed to being stored via a storage machine.

Aspects of logic machine 604 and storage machine 606 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

It will be appreciated that a "service", as used herein, is an application program executable across multiple user sessions. A service may be available to one or more system components, programs, and/or other services. In some implementations, a service may run on one or more server-computing devices.

When included, display subsystem 608 may be used to present a visual representation of data held by storage machine 606. This visual representation may take the form of a graphical user interface (GUI). As the herein described methods and processes change the data held by the storage machine, and thus transform the state of the storage machine, the state of display subsystem 608 may likewise be transformed to visually represent changes in the underlying data. Display subsystem 608 may include one or more display devices utilizing virtually any type of technology. Such display devices may be combined with logic machine 604 and/or storage machine 606 in a shared enclosure, or such display devices may be peripheral display devices.

When included, input subsystem 610 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 612 may be configured to communicatively couple computing system 602 with one or more other computing devices. Communication subsystem 612 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 602 to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and nonobvious combinations and sub-combinations of the various processes, systems and configurations, and other features, functions, acts, and/or properties disclosed herein, as well as any and all equivalents thereof.

## Claims

1. A computer-implemented method carried out on a computing device (602) comprising a logic machine (604) and a storage machine (606), the method for generating a playlist comprising a list of media items, the method comprising the steps of:
receiving (102) a request to generate a playlist from a selected text, the selected text comprising a web page;
obtaining source HTML of the web page;
identifying via HTML tags in the source HTML one or more sections of the source HTML likely to include media information;
performing a search within the one or more sections of the source HTML, and obtaining identification information identifying one or more items of media information within the one or more sections from the search; wherein the one or more items of media information comprise one or more of a musical artist, song, album, television show, movie, and video,
based on the identification information, obtaining a list of media items associated with the one or more items of text-based media information identified within the source HTML of the web page; and
generating (132) the playlist with a list of media items;
wherein identifying via HTML tags in the source HTML the one or more sections of the source HTML likely to include media information comprises identifying the one or more sections of the source HTML based on one or each of an audio tag, and a video tag associated with the one or more sections of the source HTML.

2. The method of claim 1, wherein receiving the request to generate the playlist from the selected text comprises receiving an input of a URL that identifies the web page.

3. The method of any preceding claim, wherein obtaining identification information identifying one or more items of media information further comprises:
if the identification information includes an artist name, cross-referencing the artist name against a catalog or database of artists to determine a relative popularity of the artist;
if the popularity of the artist is above a threshold, determining that the identification information does identify the artist; and
if the popularity of the artist is not above the threshold, discarding any information associated with the artist name.

4. The method of any preceding claim, wherein obtaining identification information identifying one or more items of media information further comprises:
if the identification information includes one or more artist names, identifying any patterns in the positioning of the artist names; and
sampling an entry in the pattern to test if the entry is a track or an album.

5. A computing device (602) comprising:
a logic machine (604);
a storage machine (606); and
instructions stored on the storage machine that are executable by the logic machine to generate a playlist comprising a list of media items by
presenting (502) a user interface comprising a playlist creation control; receiving (504) an input requesting creation of a playlist from text at a specified URL, the selected text comprising a web page;
obtaining source HTML of the text at the specific URL:
identifying via HTML tags in the source HTML one or more sections of the source HTML likely to include media information;
performing a search within the one or more selections of the source HTML and obtaining (506) information identifying one or more items of media information within the source HTML from the search; and
generating the playlist with media items identified by the one or more items of media information within the text, wherein the one or more items of media information comprise one or more of a musical artist, song, album, television show, movie, and video ; and
presenting (508) the playlist to a user;
wherein the HTML tags comprise one or each of an audio tag, and a video tag.

6. The computing device of claim 5, wherein receiving the input requesting creation of a playlist comprises receiving a request for display of an operating system control, displaying the operating system control, and receiving the input requesting the creation of the playlist via the operating system control.

7. The computing device of claim 5 or claim 6, wherein receiving the input requesting creation of a playlist comprises displaying a web page having a selectable user interactive control and receiving the input requesting the creation of the playlist via the user interactive control.

8. The computing device of any of claims 5 to 7, wherein receiving the input requesting creation of a playlist comprises displaying a webpage with a dedicated URL field and receiving the input requesting the creation of the playlist via the dedicated URL field.

9. The computing device of any of claims 5 to 8, wherein the identification information comprises a name of an artist, and wherein the instructions are further executable to generate the playlist by identifying one or more of a song title and an album title associated with the artist within the source HTML, and selecting one or more audio tracks identified by the song title or album title to include in the playlist.

## Patentansprüche

1. Computerimplementiertes Verfahren, welches von einer Datenverarbeitungsvorrichtung (602) ausgeführt wird, welche ein logisches Gerät (604) und ein Speichergerät (606) umfasst, wobei das Verfahren zum Erzeugen einer Wiedergabeliste dient, welche eine Liste von Medienelementen umfasst, wobei das Verfahren die folgenden Schritte umfasst:
Empfangen (102) einer Anforderung zum Erzeugen einer Wiedergabeliste aus einem ausgewählten Text, wobei der ausgewählte Text eine Webseite umfasst;
Erhalten von HTML-Quellcode der Webseite;
Identifizieren, über HTML-Tags in dem HTML-Quellcode, eines oder mehrerer Abschnitte des HTML-Quellcodes als wahrscheinlich Medieninformationen einschließend;
Durchführen einer Suche innerhalb des einen oder der mehreren Abschnitte des HTML-Quellcodes und Erhalten von Identifizierungsinformationen, welche ein oder mehrere Elemente von Medieninformationen innerhalb des einen oder der mehreren Abschnitte aus der Suche identifizieren; wobei das eine oder die mehreren Elemente von Medieninformationen eines oder mehrere von einem Musiker, Song, Album, einer Fernsehsendung, einem Film und einem Video umfassen,
auf Basis der Identifizierungsinformationen Erhalten einer Liste von Medienelementen, welche mit dem einen oder den mehreren Elementen von textbasierten Medieninformationen verknüpft sind, welche innerhalb des HTML-Quellcodes der Webseite identifiziert wurden; und
Erzeugen (132) einer Wiedergabeliste mit einer Liste von Medienelementen;
wobei Identifizieren des einen oder der mehreren Abschnitte des HTML-Quellcodes, welche wahrscheinlich Medieninformationen einschließen, über HTML-Tags in dem HTML-Quellcode Identifizieren des einen oder der mehreren Abschnitte des HTML-Quellcodes auf Basis eines oder jedes von einem Audio-Tag und einem Video-Tag, welche mit dem einen oder den mehreren Abschnitten des HTML-Quellcodes verknüpft sind, umfasst.

2. Verfahren nach Anspruch 1, wobei Empfangen der Anforderung zum Erzeugen der Wiedergabeliste aus dem ausgewählten Text Empfangen einer Eingabe einer URL umfasst, welche die Webseite identifiziert.

3. Verfahren nach einem der vorstehenden Ansprüche, wobei Erhalten von Identifizierungsinformationen, welche ein oder mehrere Elemente von Medieninformationen identifizieren, weiter umfasst:
wenn die Identifizierungsinformationen den Namen eines Künstlers einschließen, Vergleichen des Namens des Künstlers mit einem Katalog oder einer Datenbank von Künstlern, um eine relative Bekanntheit des Künstlers zu ermitteln;
wenn die Bekanntheit des Künstlers über einer Schwelle liegt, Ermitteln, dass die Identifizierungsinformationen den Künstler identifizieren; und
wenn die Bekanntheit des Künstlers nicht über der Schwelle liegt, Verwerfen aller Informationen, welche mit dem Namen des Künstlers verknüpft sind.

4. Verfahren nach einem der vorstehenden Ansprüche, wobei Erhalten von Identifizierungsinformationen, welche ein oder mehrere Elemente von Medieninformationen identifizieren, weiter umfasst:
wenn die Identifizierungsinformationen einen oder mehrere Namen von Künstlern einschließen, Identifizieren etwaiger Muster in der Positionierung der Namen der Künstler; und
Abtasten eines Eintrags in dem Muster, um zu testen, ob der Eintrag ein Musiktitel oder ein Album ist.

5. Datenverarbeitungsvorrichtung (602), umfassend:
ein logisches Gerät (604);
ein Speichergerät (606); und
Anweisungen, welche auf dem Speichergerät gespeichert sind, welche von dem logischen Gerät ausführbar sind, um eine Wiedergabeliste zu erzeugen, welche eine Liste von Medienelementen umfasst, durch
Anzeigen (502) einer Benutzeroberfläche, welche eine Steuerung zur Erstellung von Wiedergabelisten umfasst;
Empfangen (504) einer Eingabe mit einer Anforderung zum Erzeugen einer Wiedergabeliste aus Text in einer angegebenen URL, wobei der ausgewählte Text eine Webseite umfasst;
Erhalten von HTML-Quellcode des Textes in der angegebenen URL:
Identifizieren, über HTML-Tags in dem HTML-Quellcode, eines oder mehrerer Abschnitte des HTML-Quellcodes als wahrscheinlich Medieninformationen einschließend;
Durchführen einer Suche innerhalb des einen oder der mehreren Auswahlen des HTML-Quellcodes und Erhalten (506) von Informationen, welche ein oder mehrere Elemente von Medieninformationen innerhalb des HTML-Quellcodes identifizieren, aus der Suche; und
Erzeugen einer Wiedergabeliste mit Medienelementen, welche von dem einen oder den mehreren Elementen von Medieninformationen innerhalb des Textes identifiziert wurden, wobei das eine oder die mehreren Elemente von Medieninformationen eines oder mehrere von einem Musiker, Song, Album, einer Fernsehsendung, einem Film und einem Video umfassen; und
Anzeigen (508) der Wiedergabeliste für einen Benutzer;
wobei die HTML-Tags eines oder jedes von einem Audio-Tag und einem Video-Tag umfassen.

6. Datenverarbeitungsvorrichtung nach Anspruch 5, wobei Empfangen der Eingabe zur Anforderung zur Erstellung einer Wiedergabeliste Empfangen einer Anforderung zur Anzeige einer Steuerung des Betriebssystems, Anzeigen der Steuerung des Betriebssystems und Empfangen der Eingabe zur Anforderung der Erstellung der Wiedergabeliste über die Steuerung des Betriebssystems umfasst.

7. Datenverarbeitungsvorrichtung nach Anspruch 5 oder Anspruch 6, wobei Empfangen der Eingabe zur Anforderung der Erstellung einer Wiedergabeliste Anzeigen einer Webseite mit einer auswählbaren interaktiven Benutzersteuerung und Empfangen der Eingabe zur Anforderung der Erstellung der Wiedergabeliste über die interaktive Benutzersteuerung umfasst.

8. Datenverarbeitungsvorrichtung nach einem der Ansprüche 5 bis 7, wobei Empfangen der Eingabe zur Anforderung der Erstellung einer Wiedergabeliste Anzeigen einer Webseite mit einem dezidierten URL-Feld und Empfangen der Eingabe zur Anforderung der Erstellung der Wiedergabeliste über das dezidierte URL-Feld umfasst.

9. Datenverarbeitungsvorrichtung nach einem der Ansprüche 5 bis 8, wobei die Identifizierungsinformationen einen Namen eines Künstlers umfassen, und wobei die Anweisungen weiter ausführbar sind, um durch Identifizieren eines oder mehrerer von einem Songtitel und einem Albumtitel, welche mit dem Künstler verknüpft sind, innerhalb des HTML-Quellcodes und Auswählen eines oder mehrerer Audio-Musiktitel, welche durch den Songtitel oder Albumtitel für die Aufnahme in die Wiedergabeliste identifiziert wurden, die Wiedergabeliste zu erstellen.

## Revendications

1. Procédé mis en oeuvre par ordinateur effectué sur un dispositif informatique (602) comprenant une machine logique (604) et une machine de stockage (606), le procédé de génération d'une liste de lecture comprenant une liste d'éléments médias, le procédé comprenant les étapes suivantes :
la réception (102) d'une demande de génération une liste de lecture à partir d'un texte sélectionné, le texte sélectionné comprenant une page Web ;
l'obtention d'un HTML source de la page Web ;
l'identification, par l'intermédiaire de balises HTML dans le HTML source, d'une ou plusieurs sections du HTML source susceptibles d'inclure des informations médias ;
la réalisation d'une recherche dans les une ou plusieurs sections du HTML source, et l'obtention d'informations d'identification identifiant un ou plusieurs éléments d'informations médias dans les une ou plusieurs sections à partir de la recherche ; dans lequel les un ou plusieurs éléments d'informations médias comprennent un ou plusieurs d'un artiste musical, d'une chanson, d'un album, d'une émission de télévision, d'un film, et d'une vidéo,
sur la base des informations d'identification, l'obtention d'une liste d'éléments médias associés aux un ou plusieurs éléments d'informations médias à base de texte identifiés dans le HTML source de la page Web ; et
la génération (132) de la liste de lecture avec une liste d'éléments médias ;
dans lequel l'identification, par l'intermédiaire de balises HTML dans le HTML source, des une ou plusieurs sections du HTML source susceptibles d'inclure des informations médias comprend l'identification des une ou plusieurs sections du HTML source sur la base d'une ou de chacune d'une balise audio et d'une balise vidéo associées aux une ou plusieurs sections du HTML source.

2. Procédé selon la revendication 1, dans lequel la réception de la demande de générer la liste de lecture à partir du texte sélectionné comprend la réception d'une entrée d'une URL qui identifie la page Web.

3. Procédé selon une quelconque revendication précédente, dans lequel l'obtention d'informations d'identification identifiant un ou plusieurs éléments d'informations médias comprend en outre :
si les informations d'identification incluent un nom d'artiste, la référence croisée du nom de l'artiste par rapport à un catalogue ou une base de données d'artistes pour déterminer une popularité relative de l'artiste ;
si la popularité de l'artiste est supérieure à un seuil, la détermination du fait que les informations d'identification identifient bien l'artiste ; et
si la popularité de l'artiste n'est pas supérieure au seuil, l'élimination d'informations associées au nom de l'artiste.

4. Procédé selon une quelconque revendication précédente, dans lequel l'obtention d'informations d'identification identifiant un ou plusieurs éléments d'informations médias comprend en outre :
si les informations d'identification incluent un ou plusieurs noms d'artistes, l'identification d'éventuels schémas dans le positionnement des noms d'artistes ; et
l'échantillonnage d'une entrée dans les schémas pour tester si l'entrée est une piste ou un album.

5. Dispositif informatique (602) comprenant :
une machine logique (604) ;
une machine de stockage (606) ; et
des instructions stockées dans la machine de stockage, qui sont exécutables par la machine logique pour générer une liste de lecture comprenant une liste d'éléments médias en
présentant (502) une interface utilisateur comprenant une commande de création de liste de lecture ;
recevant (504) une entrée demandant la création d'une liste de lecture à partir d'un texte à une URL indiquée, le texte sélectionné comprenant une page Web ;
obtenant un HTML source du texte à l'URL indiquée ;
identifiant, par l'intermédiaire de balises HTML dans le HTML source, une ou plusieurs sections du HTML source susceptibles d'inclure des informations médias ;
réalisant une recherche dans les une ou plusieurs sélections du HTML source et en obtenant (506) des informations identifiant un ou plusieurs éléments d'informations médias dans le HTML source à partir de la recherche ; et
générant la liste de lecture avec des éléments médias identifiés par les un ou plusieurs éléments d'informations médias dans le texte, dans lequel les un ou plusieurs éléments d'informations médias comprennent un ou plusieurs d'un artiste musical, d'une chanson, d'un album, d'une émission de télévision, d'un film et d'une vidéo ; et
présentant (508) la liste de lecture à un utilisateur ;
dans lequel les balises HTML comprennent une ou chacune d'une balise audio et d'une balise vidéo.

6. Dispositif informatique selon la revendication 5, dans lequel la réception de l'entrée demandant la création d'une liste de lecture comprend la réception d'une demande d'affichage d'une commande de système d'exploitation, l'affichage de la commande de système d'exploitation et la réception de l'entrée demandant la création de la liste de lecture par l'intermédiaire de la commande de système d'exploitation.

7. Dispositif informatique selon la revendication 5 ou la revendication 6, dans lequel la réception de l'entrée demandant la création d'une liste de lecture comprend l'affichage d'une page Web comportant une commande interactive utilisateur sélectionnable et la réception de l'entrée demandant la création de la liste de lecture par l'intermédiaire de la commande interactive utilisateur.

8. Dispositif informatique selon l'une quelconque des revendications 5 à 7, dans lequel la réception de l'entrée demandant la création d'une liste de lecture comprend l'affichage d'une page Web avec un champ URL dédié et la réception de l'entrée demandant la création de la liste de lecture par l'intermédiaire du champ URL dédié.

9. Dispositif informatique selon l'une quelconque des revendications 5 à 8, dans lequel les informations d'identification comprennent un nom d'artiste, et dans lequel les instructions sont exécutables en outre pour générer la liste de lecture en identifiant un ou plusieurs d'un titre de chanson et d'un titre d'album associés à l'artiste dans le HTML source et en sélectionnant une ou plusieurs pistes audio identifiées par le titre de chanson ou le titre d'album à inclure dans la liste de lecture.
